(19) **Europäisches Patentamt**

**European Patent Office**

**Office européen des brevets**

(11) **EP 0 658 411 B1**

(12) **EUROPÄISCHE PATENTSCHRIFT**

(45) Veröffentlichungstag und Bekanntmachung des Hinweises auf die Patenterteilung:
**06.10.1999 Patentblatt 1999/40**

(51) Int. Cl.$^6$: **B29C 45/00**, C08L 23/06 // B29K23:00, B29K105:04

(21) Anmeldenummer: **94118625.6**

(22) Anmeldetag: **26.11.1994**

(54) **Verfahren zur Herstellung poröser Formkörper**

Method of manufacturing porous articles

Procédé de fabrication d'articles poreux

(84) Benannte Vertragsstaaten:
**AT BE CH DE DK ES FR GB IT LI LU NL SE**

(30) Priorität: **06.12.1993 DE 4341497**

(43) Veröffentlichungstag der Anmeldung:
**21.06.1995 Patentblatt 1995/25**

(73) Patentinhaber: **Ticona GmbH**
**65451 Kelsterbach (DE)**

(72) Erfinder:
- **Görden, Sabine**
**D-47839 Krefeld (DE)**
- **van Laak, Hermann**
**D-46469 Hünxe (DE)**
- **Schmitz, Holger**
**D-46145 Oberhausen (DE)**

(56) Entgegenhaltungen:
EP-A- 0 335 613      WO-A-85/04365
WO-A-92/08757      DE-A- 1 504 787
GB-A- 2 104 826      GB-A- 2 175 909
US-A- 4 164 531      US-A- 4 460 530

- PATENT ABSTRACTS OF JAPAN vol. 11 no. 150 (C-422) ,15.Mai 1987 & JP-A-61 283634 (ASAHI CHEM IND CO LTD) 13.Dezember 1986,
- DATABASE WPI Week 9443 Derwent Publications Ltd., London, GB; AN 94-346641 & JP-A-06 270 221 (KOMATSU SEISAKUSHO KK) , 27.September 1994
- DATABASE WPI Week 9325 Derwent Publications Ltd., London, GB; AN 93-200600 & JP-A-05 125 214 (KOMATSU KK) , 21.Mai 1993

## Beschreibung

Die Erfindung betrifft ein Verfahren zur Herstellung poröser Formkörper aus pulverförmigem ultrahochmolekularem Polyethylen (PE-UHMW) durch Spritzgießen.

Poröse Formkörper aus thermoplastischen Kunststoffen sind bekannt. Sie finden umfangreiche Anwendung in verschiedenen Gebieten der Technik, z.B. für die Gas- und Flüssigkeitsfiltration bei erhöhten und normalen Temperaturen (Filterkerzen), zur Verteilung von Gasen in Flüssigkeiten, als Isoliermaterial für Kühlanlagen, als Wärmeschutz, Schwingkörper, Polstermaterial, Stoßdämpfer für Boote, elektrolytische Membranen im Akkumulatorenbau, als Luftpolster sowie in der Textil- und Verpackungsindustrie.

Zur Herstellung poröser Formkörper aus thermoplastischen Kunststoffen sind zahlreiche Verfahren entwickelt worden. Ihre unterschiedliche Ausgestaltung berücksichtigt die Eigenschaften der Ausgangsmaterialien und die Anforderungen, die an die Erzeugnisse gestellt werden.

Nach einem in der DE-C-1 176 850 beschriebenen Verfahren stellt man feste poröse Gegenstände durch Sintern von Mischungen aus zwei Polyolefinen mit unterschiedlichem Molekulargewicht her. Dabei unterscheiden sich die Polyolefine in ihrem Erweichungsbereich um wenigstens 5°C und in ihrem viskosimetrisch bestimmten Molekulargewicht um mindestens 5000. Das Mischungsverhältnis von niedermolekularen zu höhermolekularen Polyolefinen beträgt 1 : 1,5 bis 10 Gew.-Teilen. Die Mischung wird in Formen gefüllt und auf die für das Sintern erforderliche Temperatur erhitzt.

Eine Fortentwicklung der vorstehend erläuterten Arbeitsweise ist in der DE-C-1 232 743 beschrieben. Diese Druckschrift lehrt die Herstellung fester poröser Gegenstände durch Sintern von Mischungen aus mindestens zwei Polyolefinen, die sich in ihrem viskosimetrisch bestimmten Molekulargewichtsbereich unterscheiden. In den Mischungen sind die niedermolekularen Polyolefine in einem Anteil von über 40 und höchstens 80 Gew.-% enthalten und der Molekulargewichtsbereich der höhermolekularen Polyolefine beträgt mindestens das dreifache des Molekulargewichtsbereichs der niedermolekularen Polyolefine.

Aus der DE-C-1 255 298 ist ein Verfahren zur Herstellung gesinterter poröser Körper aus pulverigen Polymerisaten aliphatischer Olefine bekannt. Man läßt das Polymerisatpulver auf eine erhitzte Grundplatte locker auffallen und frittet durch gleichbleibende Temperatureinwirkung die Einzelteilchen aneinander. Hierauf bringt man fortgesetzt feinverteiltes Ausgangsmaterial schichtenweise auf die gefrittete Grundschicht auf, frittet sie so aneinander und baut einen porösen Körper auf.

Die vorstehend beschriebenen Verfahren gehen von thermoplastischen Polymerisaten aus, die bei erhöhter Temperatur schmelzen oder zumindest erweichen. Sorgt man dafür, daß die einzelnen Partikel nur oberflächlich erweichen, dann wachsen sie zu einem stabilen Festkörper zusammen, der von Kanälen durchzogen ist, die seine Durchlässigkeit für fluide Medien sicherstellen. Eine Variante dieser Verfahren setzt Gemische aus mindestens zwei Polyolefinen ein, von denen mindestens eines beim Erhitzen erweicht und als Bindemittel für die anderen wirkt.

Im Gegensatz zu den vorstehend besprochenen Thermoplasten mit niedriger molarer Masse gehen hochmolekulare Polymerisate beim Erhitzen ohne Abbau nicht in eine Schmelze, sondern in einen viskoelastischen Zustand über. Die Polymerisatpartikel können daher nicht durch Aufschmelzen an der Oberfläche und anschließendes Erstarren der Schmelze an den Berührungspunkten miteinander eine feste Bindung eingehen. Deshalb erfordert die Herstellung poröser Formkörper aus derartigen Thermoplasten spezielle Verfahren, die sich von denen unterscheiden, die bei der Verarbeitung von Kunststoffen mit niedrigerer molarer Masse angewendet werden.

Zu den hochmolekularen Kunststoffen, die bei Erhitzen ohne Zersetzung nicht schmelzen, sondern viskoelastische Beschaffenheit annehmen, gehört das ultrahochmolekulare Polyethylen. Man versteht hierunter nach dem Niederdruckverfahren erhaltenes lineares Polyethylen mit extrem hoher Schmelzviskosität. Seine Grenzviskositätszahl beträgt mindestens etwa 1000 ml/g, entsprechend mittleren molaren Massen (Gewichtsmittel) von etwa $1 \times 10^{-6}$ g/mol und mehr. Die Umrechnung der Grenzviskositätszahl in Molmassen erfolgt dabei nach der Margolis-Gleichung, das zur Bestimmung angewandte Verfahren ist z.B. in CZ-Chemische Technik 4, 1974, Seite 129 ff beschrieben.

PE-UHMW zeichnet sich durch eine Reihe physikalischer Kenndaten aus, die ihm vielfältige Einsatzmöglichkeiten eröffnen. Es besitzt einen hohen Verschleißwiderstand, einen niedrigen Reibungskoeffizienten gegenüber anderen Werkstoffen, ausgezeichnetes Zähigkeitsverhalten und hohe Wärmestandfestigkeit. Überdies ist es bemerkenswert beständig gegenüber zahlreichen Chemikalien.

Aufgrund dieser besonderen mechanischen, thermischen und chemischen Eigenschaften hat ultrahochmolekulares Polyethylen auch in Form poröser Formkörper in den verschiedensten Anwendungsgebieten Eingang als hochwertiger Spezialwerkstoff gefunden.

Für die Verarbeitung von hochmolekularem Polyethylen zu porösen Formkörpern sind verschiedene Verfahren bekannt. So verwendet man nach der DE-C-1 241 599 für diesen Zweck pulverförmige Polymerisate mit Molekulargewichten von 250.000 bis über 500.000 und breiten Schmelzbereichen. Das Ausgangsmaterial wird in Formen erhitzt und man erhält auf diesem Wege feste, poröse, gleichmäßig durchgesinterte Polyethylenmassen.

Mikroporöse Membranen aus Polyethylen mit einem durchschnittlichen Molekulargewicht von mindestens $5 \times 10^5$ und insbesondere $1 \times 10^6$ bis $10 \times 10^6$ erhält man nach der EP-B-160 551 durch Auflösen des Polymeren in einem Lösungsmittel und Erwärmen. Aus der Lösung formt man eine Gelfolie und trennt das Lösungsmittel bis zu einem Gehalt von 10 bis 80 Gew.-% ab. Anschließend wird die Folie erwärmt, gereckt und vom restlichen Lösungsmittel befreit.

Die US-A-4 925 880 betrifft poröse Formkörper aus ultrahochmolekularem Polyethylen mit einer molaren Masse im Bereich von etwa $1 \times 10^6$ bis etwa $6 \times 10^6$ und einem Polyethylenwachs, dessen molare Masse etwa 1000 bis 20000 beträgt. Das pulverförmige heterogene Gemisch wird in einer Preßform unter Druck bis zum Schmelzen des Wachses erhitzt. Gleichzeitig erweichen die PE-UHMW-Partikel und dehnen sich aus. Benachbarte Teilchen gelangen dadurch in Berührung und verbinden sich miteinander. Man kühlt schnell ab und entfernt den porösen Körper aus der Form.

Die Herstellung poröser Werkstoffe aus Mischungen von PE-UHMW und einem anderen Polyolefin, z.B. einem Polyethylen oder einem Polypropylen, ist auch Gegenstand der JP-A-86-283634 (vgl. C.A. 106, Referat 157477 a). Als Beispiel wird die Herstellung eines porösen Werkstoffes aus 40 % PE-UHMW und Polypropylen durch 15 min Sintern bei 200°C beschrieben. Auf die chemische Beständigkeit, die mechanische Festigkeit und die Durchlässigkeit für Gas wird besonders hingewiesen.

Ein ausschließlich aus ultrahochmolekularem Polyethylen bestehendes poröses Material wird in der WO-A-92/08757 beschrieben. Es ist aus einzelnen Polyethylenpartikeln aufgebaut, die unter Ausbildung von Poren miteinander verbunden sind. Man erhält es durch Spritzgießen von plastifiziertem PE-UHMW in eine Form unter Einhaltung einer Schergeschwindigkeit von mindestens $5 \times 10^4$ sec$^{-1}$ unter solchen Bedingungen, daß der Quotient aus Gewicht des Formkörpers und seinem Volumen 0.7 g/cm$^3$ nicht übersteigt. Nach einer bevorzugten Ausführungsform setzt man dem plastifizierten PE-UHMW ein porenbildendes Additiv, z.B. Natriumchlorid, zu. Das Additiv wird mit Hilfe eines gegenüber dem Polyethylen inerten Lösungsmittel aus dem Formkörper entfernt.

Die bekannten Verfahren sind nicht frei von Nachteilen. Sie erfordern z.B. den Einsatz von Mischungen aus PE-UHMW und niedriger molekularen Polyolefinen oder den Zusatz von Additiven und beeinträchtigen dadurch bestimmte Eigenschaften des ultrahochmolekularen Polymerisats. In anderen Fällen sind die Verfahren nicht allgemein anwendbar, sondern auf die Herstellung von Formkörpern bestimmter Dimensionierung beschränkt.

Es bestand daher die Aufgabe ein Verfahren zu entwickeln, das poröse Formkörper aus ultrahochmolekularem Polyethylen liefert. Es soll möglichst allgemein anwendbar sein, keine Mischungen aus höchst- und niedrigmolekularem Polyethylen oder die Verwendung von Additiven erfordern und darüber hinaus mit konventionellen Mitteln ausgeführt werden können.

Die vorstehend beschriebene Aufgabe wird gelöst durch ein Verfahren zur Herstellung poröser Formkörper aus pulverförmigem ultrahochmolekularem Polyethylen durch Spritzgießen. Es ist dadurch gekennzeichnet, daß Polyethylen mit Grenzviskositätszahlen im Bereich von 500 bis 5.000 ml/g, einer mittleren Korngröße von 100 bis 1.500 µm und einer Schüttdichte von mindestens 0,35 g/cm$^3$ in einer Spritzgußmaschine bei 160 bis 260°C und einem Einspritzdruck von 80 bis 150 MPa verarbeitet wird, wobei das Verhältnis von Fließweg des Materials im Spritzgußwerkzeug zur Wanddicke des Formkörpers nicht größer als 7,5 ist.

Die Herstellung kompakter Formteile aus PE-UHMW durch Spritzgießen ist bekannt. Überraschenderweise ist es aber gemäß der Erfindung auch möglich, durch bestimmte Eigenschaften charakterisierte PE-UHMW-Typen unter Einhaltung ausgewählter Verfahrenskriterien in Spritzgußmaschinen zu porösen Formkörpern hoher Homogenität zu verarbeiten. Das neue Verfahren erfordert hierzu weder die Verwendung von Schäumungsmitteln noch von porenbildenden Additiven. Hervorzuheben ist, daß es nicht auf die Herstellung einfacher Strukturen oder Gebilde kleiner Dimensionen beschränkt ist.

Zur Durchführung des erfindungsgemäßen Verfahrens setzt man Polymerisate ein, die durch bestimmte Kennzahlen charakterisiert sind. Ausgangsmaterial ist pulverförmiges PE-UHMW mit einer Grenzviskositätszahl (auch als "Staudinger-Index" oder "intrinsic viscosity" bezeichnet) [η] im Bereich von 500 bis 5000 ml/g. Die Grenzviskositätszahl wird in bekannter Weise aus der Viskositätszahl η (experimentell bestimmt in Decalin als Lösungsmittel bei 135°C; vgl. hierzu DIN 53728 Blatt 4) nach der Martin-Gleichung

$$\log \eta = \log [\eta] + K \cdot [\eta] \cdot c$$

berechnet, in der K den Wert 0,139 und c den Wert 0,03 g/dl für PE-UHMW-Typen mit einer Grenzviskositätszahl im genannten Bereich hat. Bevorzugt werden Polyethylene, deren Grenzviskositätszahl 1.300 bis 3.000 ml/g beträgt.

Ein weiteres Merkmal des PE-UHMW, das nach dem erfindungsgemäßen Verfahren verarbeitet wird, ist seine mittlere Korngröße, die 100 bis 1500 µm beträgt. Unter der mittleren Korngröße (Korndurchmesser) versteht man den 50 %-Wert der Summenverteilung des Korndurchmessers. Ihre Bestimmung erfolgt durch Laserbeugung mit einem Submicron-HELOS-Gerät der Fa. SYMPATEC, Clausthal-Zellerfeld (vgl. z.B. Tagungsunterlagen der PARTEC 1989, 4. Europ. Symposium Partikelmeßtechnik, 19. - 24. April, Nürnberg). Bevorzugt setzt man ultrahochmolekulare Polyethylene ein, deren mittlere Korngröße 200 bis 1000 µm beträgt.

Schließlich wird das Einsatzmaterial noch durch eine Schüttdichte von mindestens 0,35 g/cm$^3$

beschrieben. Unter Schüttdichte versteht man den Quotienten aus der Masse und dem Volumen des Polymerisatpulvers; sie wird nach DIN 53468 bestimmt. Der Zahlenwert der Schüttdichte zeigt an, daß das Polymerisat nicht flockig strukturiert ist, sondern aus kugelförmigen oder annhähernd kugelförmigen Partikeln besteht. Vorzugsweise setzt man ultrahochmolekulares Polyethylen mit einer Schüttdichte von 0,4 bis 0,6 g/cm$^3$ ein.

PE-UHMW-Typen mit den geforderten Eigenschaften sind handelsübliche Produkte. Man erhält sie nach dem Ziegler-Prozeß durch Polymerisation von Ethylen in Gegenwart von Verbindungen von Übergangsmetallen der 4. bis 6. Gruppe des Periodensystems der Elemente zusammen mit metallorganischen Verbindungen der Elemente der 1. bis 3. Gruppe des Periodensystems. Ein entsprechendes Verfahren ist z.B. in DE-C-23 61 508 beschrieben. Ebenso können aber auch ultrahochmolekulare Polyethylene eingesetzt werden, deren Herstellung aus wasserfreiem und sauerstofffreiem Ethylen in der Gasphase in Gegenwart Chromoxid und Metallalkyle enthaltender Trägerkatalysatoren erfolgte.

Die Verarbeitung der vorstehend charakterisierten Polymerisate zu porösen Formkörpern erfolgt in Spritzgußmaschinen unter Einhaltung bestimmter Verfahrensparameter.

Ein wesentliches Merkmal des neuen Prozesses ist die Anwendung von Verarbeitungstemperaturen zwischen 160 bis 260°C. Diese Temperaturen stellen sicher, daß das thermoplastische Material so ausreichend plastifiziert wird, daß unter Einwirkung von Druck, eine bleibende Verbindung zwischen den Polymerisatteilchen aufgebaut wird. Bevorzugt werden Temperaturen im Bereich von 190 bis 220°C.

Im Massezylinder, das ist der Raum vor der Düse, in dem das Polymerisatpulver plastifiziert wurde, steht das erhitzte Material unter einem Druck von 80 bis 150 und insbesondere 100 bis 120 MPa. Mit diesem Druck (Einspritzdruck) wird es durch die Düse in den Werkzeughohlraum gepreßt. Er ist so bemessen, daß die Teilchen unter Aufbau von Kanälen aneinander haften, jedoch keinen kompakten Festkörper ergeben.

Der vorstehend beschriebene Einspritzdruck ist abhängig von der Zähigkeit des Thermoplasten und zusätzlich von der Geometrie des Werkzeugs und damit der Gestalt des Formkörpers. Lange Fließwege und enge Fließwegquerschnitte im Werkzeughohlraum erfordern höhere Einspritzdrücke als kurze Fließwege und weite Fließwegquerschnitte. Erfindungsgemäß übersteigt das Verhältnis von Fließweg des Materials im Werkzeug zur Wanddicke des Formkörpers den Wert von 7,5 nicht. Unter Wanddicke wird bei unregelmäßig gestalteten Formkörpern jeweils der Durchmesser der dicksten Wand verstanden.

Nach einer bevorzugten Ausführungsform des erfindungsgemäßen Verfahrens beträgt der Innendruck im Werkzeug maximal 0,05 MPa. Die Höhe dieses Druckes steht für die Verdichtung des plastifizierten Materials, damit für den Füllgrad des Werkzeugs und ergibt Dichte und Gewicht des porösen Formkörpers. Die Messung des Innendruckes im Werkzeug erfolgt in bekannter Weise.

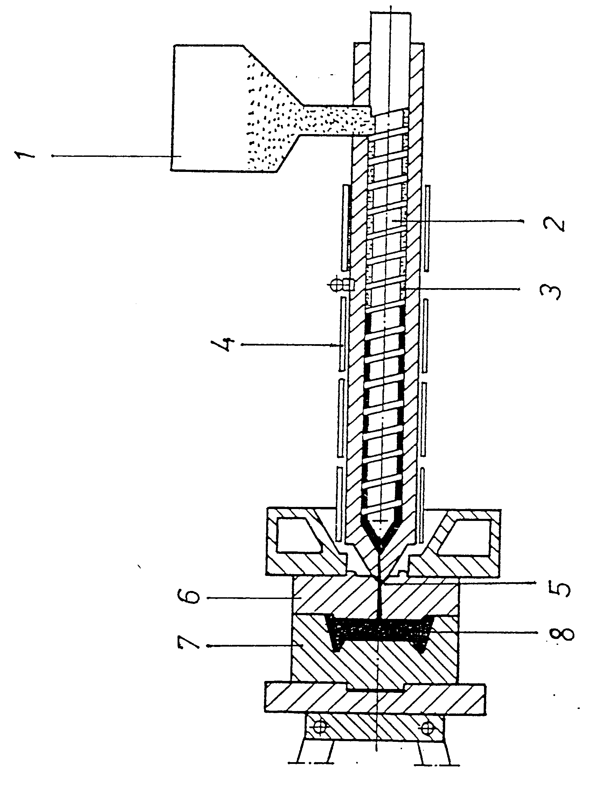

Das neue Verfahren wird in Spritzgußmaschinen konventioneller Bauart durchgeführt. Ein Beispiel derartiger Vorrichtungen ist in der beigefügten Abbildung schematisch dargestellt. Das pulverförmige Polymerisat wird von einem Massetrichter 1 durch eine Schnecke 2 in einen Massezylinder 3 gefördert. Dieser Massezylinder wird durch eine Heizvorrichtung 4 auf die erforderliche Verarbeitungstemperatur eingestellt. Das plastifizierte Material gelangt über eine Düse 5 in das Werkzeug, das aus einer feststehenden Werkzeughälfte 6 und einer beweglichen Werkzeughälfte 7 besteht, die gemeinsam einen Werkzeughohlraum 8 bilden.

Durch die nachfolgenden Beispiele wird die Erfindung näher erläutert, jedoch nicht auf die beschriebenen Ausführungsformen beschränkt.

Beispiel 1 (Vergleich)

PE-UHMW mit einer Grenzviskositätszahl von 2.000 ml/g, einer mittleren Korngröße von 70 μm und einer Schüttdichte von 0,45 g/cm$^3$ (Hostalen GUR, Hersteller: Hoechst AG) wird mit einer Massetemperatur von 220°C und einem Einspritzdruck von 85 MPa in das Werkzeug gespritzt. Die Angüsse werden so gelegt, daß das Verhältnis Fließweg zu Wanddicke 7,5 beträgt.

Der erhaltene Formkörper weist keine gleichmäßige Porengröße auf.

Beispiel 2

Beispiel 1 wird mit einem PE-UHMW-Typ gleicher Grenzviskositätszahl und gleicher Schüttdichte, jedoch einer mittleren Korngröße von 210 μm wiederholt. Die erhaltenen Formkörper weisen eine gleichmäßige Porenweite auf, der mittlere Porendurchmesser beträgt 12 μm.

Beispiel 3 (Vergleich)

Beispiel 1 wird mit einem PE-UHMW-Typ gleicher Grenzviskositätszahl, einer Schüttdichte von 0,25 g/cm$^3$ und einer mittleren Korngröße von 120 μm wiederholt. Die erhaltenen Spritzgußteile besitzen keine gleichmäßige Porenweite.

Beispiel 4 (Vergleich)

Das Polymerisat aus Beispiel 2 wird in ein Werkzeug unter solchen Bedingungen eingespritzt, daß das Verhältnis von Fließweg zu Wanddicke 20 betragt. Die Porenweite nimmt in diesem Fall über den Fließweg zu. Das Werkzeug kann nicht ganz gefüllt werden.

Beispiel 5 (Vergleich)

Beispiel 4 wird wiederholt, jedoch das Verhältnis Fließweg zu Wanddicke auf 10 vermindert. Die Werkzeugfüllung wird wesentlich verbessert, jedoch ist das Porenweitenprofil weniger stark ausgeprägt. Der mittlere Porendurchmesser liegt bei 12 µm.

Beispiel 6

Unter den in Versuch 1 angegebenen Bedingungen wird ein PE-UHMW-Typ mit einer Grenzviskositätszahl von 2650 ml/g, einer mittleren Korngröße von 350 µm und einer Schüttdichte von 0,43 g/cm$^3$ verarbeitet. Das Verhältnis Fließweg im Spritzgußwerkzeug zur Wanddicke des Formkörpers beträgt 7,0. Die Produkte weisen gleichförmige Porenweite mit einem mittleren Porendurchmesser von 20 µm auf.

**Patentansprüche**

1. Verfahren zur Herstellung poröser Formkörper aus pulverförmigem ultrahochmolekularem Polyethylen durch Spritzgießen dadurch gekennzeichnet, daß Polyethylen mit einer Grenzviskositätszahl von 500 bis 5.000 ml/g, einer mittleren Korngröße von 100 bis 1.500 µm und einer Schüttdichte von mindestens 0,35 g/cm$^3$ in einer Spritzgußmaschine bei 160 bis 260°C und einem Einspritzdruck von 80 bis 150 MPa verarbeitet wird, wobei das Verhältnis von Fließweg des Materials im Spritzgußwerkzeug zur Wanddicke des Formkörpers nicht größer als 7,5 ist.

2. Verfahren nach Anspruch 1, dadurch gekennzeichnet, daß die Grenzviskositätszahl des Polyethylens 1.300 bis 3.000 ml/g ist.

3. Verfahren nach einem oder mehreren der Patentansprüche 1 und 2, dadurch gekennzeichnet, daß die mittlere Korngröße der Polyethylenpartikel 200 bis 1.000 µm ist.

4. Verfahren nach einem oder mehreren der Ansprüche 1 bis 3, dadurch gekennzeichnet, daß die Schüttdichte des pulverförmigen ultrahochmolekularen Polyethylens 0,4 bis 0,6 g/cm$^3$ ist.

5. Verfahren nach einem oder mehreren der Ansprüche 1 bis 4, dadurch gekennzeichnet, daß die Verarbeitungstemperatur 190 bis 220°C beträgt.

6. Verfahren nach einem oder mehreren der Ansprüche 1 bis 5, dadurch gekennzeichnet, daß der Einspritzdruck 100 bis 120 MPa beträgt.

7. Verfahren nach einem oder mehreren der Patentansprüche 1 bis 6, dadurch gekennzeichnet, daß der Innendruck im Werkzeug 0,05 MPa nicht übersteigt.

**Claims**

1. A process for the production of porous moldings of pulverulent, ultrahigh-molecular-weight polyethylene by injection molding, which comprises processing polyethylene having an intrinsic viscosity of from 500 to 5000 ml/g, a mean particle size of from 100 to 1500 µm and a bulk density of at least 0.35 g/cm$^3$ in an injection-molding machine at from 160 to 260°C and an injection pressure of from 80 to 150 MPa, where the ratio between the flow distance of the material in the injection mold and the wall thickness of the molding is not greater than 7.5.

2. The process as claimed in claim 1, wherein the intrinsic viscosity of the polyethylene is from 1300 to 3000 ml/g.

3. The process as claimed in one or more of patent claims 1 and 2, wherein the mean particle size of the polyethylene particles is from 200 to 1000 µm.

4. The process as claimed in one or more of claims 1 to 3, wherein the bulk density of the pulverulent, ultrahigh-molecular-weight polyethylene is from 0.4 to 0.6 g/cm$^3$.

5. The process as claimed in one or more of claims 1 to 4, wherein the processing temperature is from 190 to 220°C.

6. The process as claimed in one or more of claims 1 to 5, wherein the injection pressure is from 100 to 120 MPa.

7. The process as claimed in one or more of patent claims 1 to 6, wherein the internal pressure in the mold does not exceed 0.05 MPa.

**Revendications**

1. Procédé de fabrication de corps moulés poreux en polyéthylène à poids moléculaire ultra élevé, en forme de poudre, par moulage par injection, caractérisé en ce que l'on traite un polyéthylène d'un indice de viscosité limite de 500 à 5 000 ml/g, d'une taille particulaire moyenne de 100 à 1 500 µm et d'une densité apparente d'au moins 0,35 g/cm$^3$ dans une machine de moulage par injection, à 160 jusqu'à 260°C et à une pression d'injection de 80 à 150 MPa, le rapport entre le parcours d'écoulement du matériau dans l'outil de moulage par injection et l'épaisseur de paroi du corps moulé n'étant pas supérieur à 7,5.

2. Procédé selon la revendication 1, caractérisé en ce que l'indice de viscosité limite du polyéthylène est 1 300 à 3 000 ml/g.

3. Procédé selon l'une ou plusieurs des revendications 1 et 2, caractérisé en ce que la taille particulaire moyenne des particules de polyéthylène est 200 à 1 000 µm.

4. Procédé selon l'une ou plusieurs des revendications 1 à 3, caractérisé en ce que la densité apparente du polyéthylène de poids moléculaire ultra élevé, en forme de poudre est 0,4 à 0,6 g/cm$^3$.

5. Procédé selon l'une ou plusieurs des revendications 1 à 4, caractérisé en ce que la température de traitement vaut 190 à 220°C.

6. Procédé selon l'une ou plusieurs des revendications 1 à 5, caractérisé en ce que la pression d'injection vaut 100 à 120 MPa.

7. Procédé selon l'une ou plusieurs des revendications 1 à 6, caractérisé en ce que la pression intérieure dans l'outil ne dépasse pas 0,05 MPa.